# NEW EUROPEAN PATENT SPECIFICATION

(11) **EP 0 486 987 B2**
(45) Date of publication and mention of the opposition decision: **29.10.2008**
(45) Mention of the grant of the patent: 10.02.1999
(21) Application number: 91119632.7
(22) Date of filing: 18.11.1991
(51) Int. Cl.: H04N 5/445

(54) **Television image visualising device**
Fernsehbildanzeigevorrichtung
Dispositif de visualisation d'image de télévision

(30) Priority: 22.11.1990 IT 6791490
(43) Date of publication of application: 27.05.1992
(73) Proprietor: EDICO S.r.l., 00197 Roma (IT)
(72) Inventor: Dini, Roberto, I-10095 Rivoli (TO) (IT); Farina, Attilio, I-10127 Torino (TO) (IT)
(74) Representative: Eisenführ, Speiser & Partner

(56) References cited:
- EP-A- 0 187 262
- EP-A- 0 355 172
- EP-A2- 0 267 020
- EP-A2- 0 376 376
- US-A- 4 464 652
- PATENT ABSTRACTS OF JAPAN vol. 14, no. 584 (E-1018)27 December 1990 & JP-A-2 254 894 ( MATSUSHITA ) 15 October 1990
- PATENT ABSTRACTS OF JAPAN vol. 8, no. 272 (E-284)13 December 1984 & JP-A-59 141 816 ( MATSUSHITA ) 14 August 1984

## Description

The present invention relates to a method for visualising a television picture, with a step comprising means for receiving an elaborating the picture signal, memory means for memorising the picture signals received and picture visualising means, with the possibility of simultaneously viewing a plurality of different pictures.

Furthermore the invention relates to a television picture visualising device for executing the method.

Both television receivers and videorecorders presenting the described characteristics are known.

For example there are known television receivers, such as SABA M6321VTPIP, that allow for the visualisation of up to 5 television pictures, corresponding to different programs received; one of the mentioned pictures at full screen size, while the other 4 are of reduced dimensions.

Videorecorders are also known that allow for the simultaneous viewing of 16 different television pictures, each occupying a sixteenth of the screen.

From EP-A-376376 it is known a television picture visualising device, comprising means for receiving and operating the picture signals and picture visualising means and additional means for indicating by means of a cursor a determined picture element.

Furthermore, it is disclosed in EP-A-390041 a remote control unit for audiovisual apparatus by which a cursor can be moved in a diagonal direction over a screen to control several icons on the screen.

It is known from EP-A-267020 a television picture visualising device, comprising means for receiving and processing the picture signal, memory means for memorising the picture signals received and picture visualising means, with the possibility of simultaneously viewing a plurality of different pictures.

From EP-A-187262 it is known a device for visualising a picture, with means for receiving and processing the picture signal and the picture visualising means whereby this device comprises a command device as a track ball comprising a sphere, which moved to a plurality of directions, produces relevant control signals in order to act on a visual indicating means signalling the effect produced by the command given by the user through said sphere and presetting the device to accept an operating command.

It is known from EP-A-0 355 172 a remote control system with a remote control transmitter having a menu key. By means of the orientation of the remote control transmitter it is possible to point to corresponding menu fields ; this system is also suitable for channel switching.

The invention is based on the knowledge of the fact that it may be useful for the television user in given cases to simultaneously view a plurality of television pictures on the screen, so as to see what is being transmitted by different broadcasters and to be able to select a program of interest. To carry out this operation the user usually has to remember the number of the picture that is of interest, cancel the multiple picture and to call, in the normal method provided, the program that he has chosen to see; in particular, the fact that the number must be remembered is inconvenient, in as much that distractions (for example somebody saying something) may cause the user to forget.

The invention takes into consideration such a fact; the aim of the present invention is to indicate an improved method and system with regards those known, for obtaining in the mentioned cases the viewing of the chosen program.

To allow such aims, the present invention proposes a method according to claim 1 and a television picture visualising device according to claim 5.

Preferred embodiments are proposed in the dependent claims.

Further aims and advantages will become clear from the following detailed description and annexed drawings, supplied as an explanatory and non limiting example, wherein:
Figure 1 represents a block diagram of a part of the invention according to the invention;
Figure 2 represents a diagram of the device according to the invention;
Figure 3 represents a command unit of the device in figure 1;
Figure 4 represents a block diagram of a part of the command logic circuit of the device in figure 1.

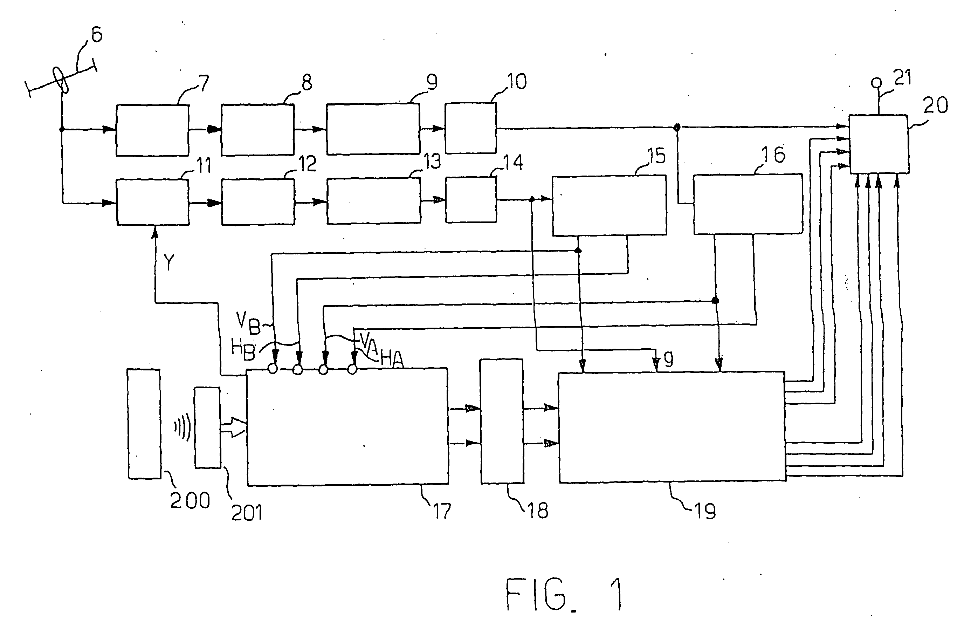

In figure 1 a block diagram of a part of the invention according to the invention is represented; this concerns a device comprising the so called PIP, meaning picture in picture, or as would be more precise, 'multipip', that is able to visualise more than two television signals.

In figure 1 the reference number 6 indicates the recieving antenna; whereas the reference numbers 7 and 11 indicate two tuners, of the type known, that simultaneously tune in to two television signals belonging to two different television channels (A and B).

Likewise numbers 8 and 12 indicate two intermediate frequency amplifyers; numbers 9 and 13 refer to two video detectors and the numbers 10 and 14 to two video signal amplifyers.

Number 15 refers to the circuit that generates the syncronism signals, vertical and horizontal, starting from the relative impulses contained in the second video signal B; while number 16 indicates an analogous circuit that generates the syncronism signals for the first video signal A.

Reference number 200 indicates a remote control signal transmitter, for example the usual type using infrared rays; number 201 indicates the respective signal receiver; which is linked to a control circuit, indicated with the reference number 17, of which will be mentioned later; syncronism signals (VA, HA, VB, HB) also reach the circuit 17. A control signal (Y) for the tuner B departs from the circuit 17, which serves in the cyclic selectioning of the secondary television signal.

Number 18 relates to a clock impulse generator; 19 relates to a memory for memorising the video signal B. Reference number 20 indicates a reference circuit which is reached by the video signals A and the signals coming from the memory 19; reference number 21 refers to an output terminal, to which the mixed video signal is available, containing both the picture A and the picture B of a reduced dimension.

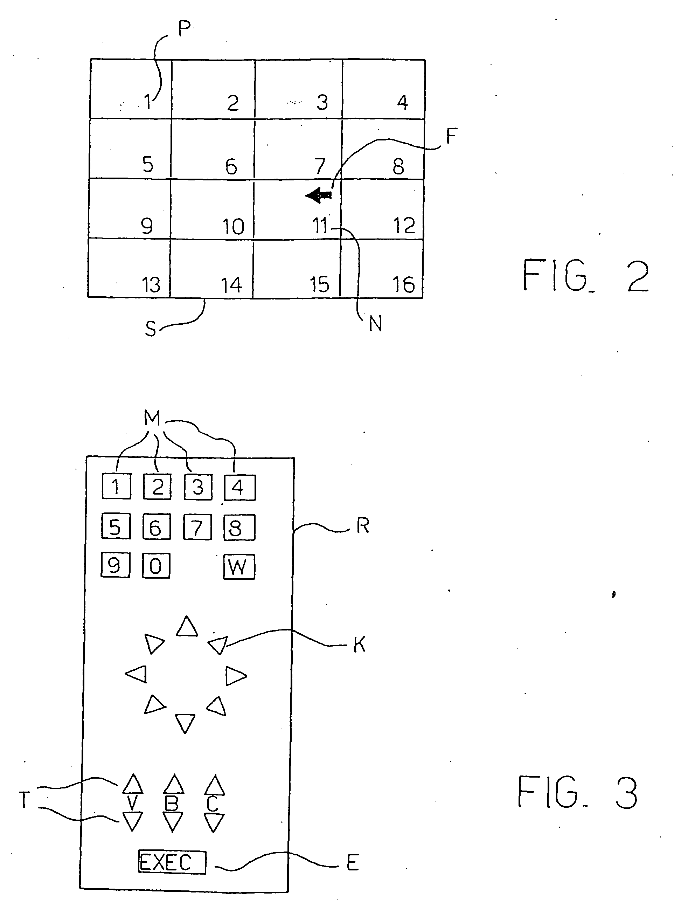

In figure 2 the screen of the device according to the invention is represented; such a device can be, for example, a television set or a monitor.

With the reference symbol S the actual screen is indicated, which is supposed to be that of a picture relationship of 3:4; naturally the relationship may be different, for example 4:5 or 4:9; such relationships are of no importance for the aim of the present invention. The screen is represented divided into 16 parts, each of which maintaining the same picture relationship; also here the parts could be of 4 or 64 without being determining. Each part represents an picture of decreased dimensions of a received corrisponding program whose tuning coordinates have been memorised by combining them to a numerical key; the number of such a key, i.e. the number assigned to a corrisponding program is visualised in the lower left hand corner of each single picture (note for instance reference symbol P).

Naturally to be able to visualise all 16 pictures they must be memorised in 16 memories (however only 15 memories are essentially necessary as one of the pictures can be received directly); such a technique is known and commonly referred to as 'multipip', as mentioned above.

The reference symbol F represents the cursor, in the form of an arrow (but could be could be of any other form , such as a square or circle), presented in the upper right hand corner of picture number 11, obtained, also by known techniques, by superimposing it on the picture or pictures, as is so for the numbers P.

Such a cursor element can be made more visable by making it flash, which can be done, also with known means, for example by supressing it for 5 rasters and making it visible for the following 5 rasters.

As a cursor element the program number could simply be used at this point, made to flash, so as to avoid the need of the additional element F.

Figure 3 represents a command unit of the device, the screen of which is designed in figure 1; the symbol M represents a plurality of numbered keys, with known and obvious functions, that are used for the normal control of the devices functions; the symbol T represents other usual keys, such as the volume control (V), brightness (B) and colour (C).

The symbol W indicates a key used for obtaining on the screen the picture represented in figure 2 (multipip).

With the reference symbol K an 8 keyed rose formed of isosceles triangles is indicated, the acute vertexes of which are pointed outwardly, displayed according to the vertexes of an octagon.

Such keys are used for moving the cursor element F from a picture to a neighbouring one; in the case in which the cursor element F is, as is indicated in figure 1, in the picture number 11, it can be moved, by means of one of the 8 keys K, in one of the neighbouring pictures (6,7,8,10,12,14,15,16,). For example by pushing the uppermost key, the cursor is moved to the relative picture number 7; pushing the upper left hand key, the cursor is moved to the picture number 6, and so on. In such a way it is easy for anyone to move the cursor; by using a maximum of three moves any picture can be reached starting from any other picture.

Once the cursor is positioned on the chosen picture, the pressing of the key indicated with the symbol E (EXEC key) provides for the visualisation on the whole screen of the relative program. This is obtained because the character generator, that generates the numbers P and eventually the cursor F (in the case where the number itself is not used as a marker, in the flashing form), knows the coordinates (lines and columns) of the cursor itself, and therefore in which square of the board it is to be found. It is therefore sufficient to reascend from the numbers of lines and columns relative to the cursor, to the number of the square, and therefore the picture, and provide the receiver with the command for selectioning the corrisponding program to such a number (in practice the tuning data will be memorised in a corrisponding cell of the tuning memory).

Instead of using the 8 keys K, if preferred, a single key could be used, for example in the form of an octagon, or a circular disc, that, depending on how it is pressed, activates the relative contacts. On the single key, for example in the form of a disc, 8 arrows will be printed so as to indicate the direction in which it is to be pressed.

It is to be noted that, passing from a device with four keys to one with eight, i.e for obtaining diagonal movements, that in the described form, saves three movements in the case of passing from a corner of the picture to a opposite corner, does not require extra contacts.

Infact it is sufficient that the 4 corner keys each close the contacts of the two adjacent keys.

In the case of 64 subpictures the advantages of the diagonal keys are even more important: up to seven movements are to saved in such a case.

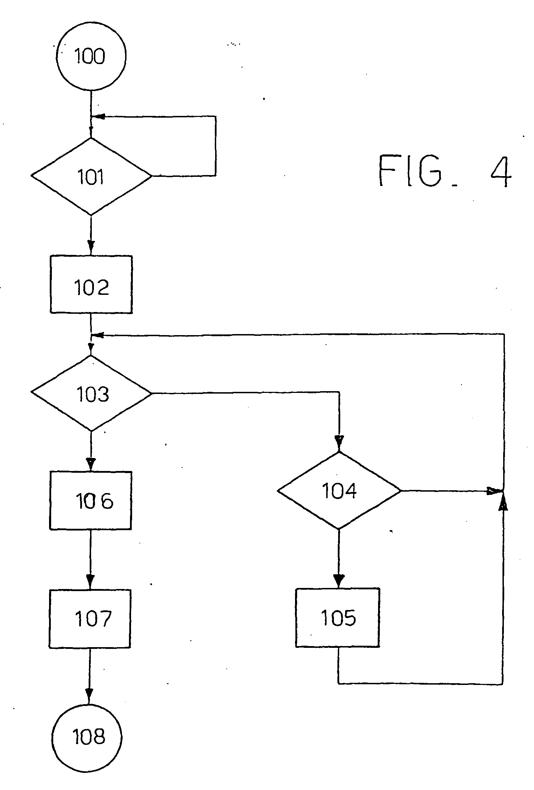

Figure 4 represents a block diagram of a part of the command logic circuit of the device in figure 1; such circuit, that can be incorporated in the block indicated in figure 1 with the number 17, may be indiscriminately embodied with the cabled logic system or with the programmed logic system, i.e. utilising a microprocessor, said second system is generally cheaper, also because televisions and videorecorders are normally realised with one or more microprocessors; the part represented in figure 4 is typical of the invention.

The block 100 is the starting block of the program selection operation.

Block 101 is a control block; it checks whether the key W has been pressed; in the affirmative control passes to block 102; in the negative control passes back to block 101 itself (in all the checking blocks the inferior output is the YES output, whereas the lateral output is the NO output).

Block 102 provides to visualise the multiple picture (multipip), in which every picture corrisponds to one of the 16 programs memorised by the user, by the known means, in the program memory; the pictures are explored in a cyclic manner by means of the tuner B in figure 1, reduced in dimension and memorised in the memory 19. The numbers P are also generated, by means of a suitable character generator, and the cursor F, that is positioned on picture N°1, i.e. in the upper left hand corner of the screen. Control then passes to block 103.

Block 103 is a control block; it checks whether key E has been pressed; in the affirmative control passes to block 106; in the negative control passes to block 104.

Block 104 is a control block; it checks whether key K has been pressed; in the affirmative control passes to block 105; in the negative case the control passes back to block 103.

Block 105 provides for the cancelling of the cursor from within the square it is to be found and to visualise it in one of the adjacent squares depending on which key K has been pressed; control passes back to block 130.

Block 106 provides to identify which square the cursor is to be found, interrogating the state of the character generator, and calculating from the number of lines and columns; the control then passes to the successive block 107.

Block 107 provides for the giving of suitable operative commands for reading within the program memory the tuning coordinates relative to the corrisponding program of the selected picture; to supply such coordinates to the tuner; and finally to visualise on the whole screen the picture corrisponding to the signal coming from the tuner A. Control then passes to block 108.

Block 108 is the final block of the program selection operation.

The characteristics of the device described become clear from the effected description and annexed drawings.

The advantages of the device object of the present invention also become clear from the effected description.

In particular they consist in the fact that it is possible for the user to easily choose the picture corrisponding to the program of interest, by moving the cursor (flashing) on to the chosen picture, by means of the appropriate keys, carrying out a maximum of three cursor movements, in the case of 16 pictures; and therefore by pressing the "exec" key the visualisation on the whole screen of the chosen program is directly obtained.

It is also clear that numerous variations of the television picture visualising device, described as an example are possible to the man of the art, without however departing from the novelty principles inherent to the invention.

For example, in a case where in the memorised programs are more than sixteen, let us suppose 32, the pictures can be visualised in two successive screens of sixteen; for passing from one to another the "+" key could be utilised in one sense and the "-" key in the other; such keys are usually always present on all remote control units; their functioning as described would be enabled after activating the key W.

## Claims

1. Method for selecting a television program and activating the reception and visualisation thereof on a screen (S) of a television picture visualising device, **characterized in** combination by the following steps:
- visualising on said screen several pictures of reduced dimensions of corresponding television programs, memorised in a memory and displayed in a matrix according to a plurality of rows and columns;
- visualising on said screen a cursor (F), superimposed on one of said pictures whereby said cursor (F) is generated by a character generator;
- providing command means (K) for moving said cursor (F), from one of the pictures to anyone of the neighbouring ones, by acting on one or more keys of said command means;
- providing further means (17) for identifying among said several television pictures the selected picture in which the cursor (F) is positioned, interrogating the state of said character generator, and calculating from the number of rows and columns, relative to the cursor (F), the corresponding cell of a tuning memory where tuning data are stored corresponding to the selected picture;
- supplying said tuning data to a tuner (A) for tuning into said program indicated by the cursor (F); and
- visualising a full screen picture corresponding to the television signal coming from said tuner (A).

2. Method according to claim 1, **characterized in that** selection of the selected picture is made by a flashing cursor (F), said cursor (F) moving in vertical, horizontal and/or diagonal sense.

3. Method according to claim 1 or 2, **characterized in that** said step of moving said cursor (F) even in diagonal sense provides for a command device (R) with 8 keys (K) arranged according to the vertexes of an octagon.

4. Method according to one of the preceding claims, **characterized in that** said cursor (F) is in the form of an arrow or in form of a number.

5. Television picture visualising device for selecting a television program and activating the reception and visualisation thereof on a screen (S), **characterized by** comprising in combination:
- means for visualising on said screen several pictures of reduced dimensions of corresponding television programs, memorised in a memory and displayed in a matrix according to a plurality of rows and columns;
- means for visualising on said screen a cursor (F), superimposed on one of said pictures whereby said cursor (F) is generated by a character generator;
- command means (K) for moving said cursor (F) from one of the pictures to anyone of the neighbouring ones, by acting on one or more keys of said command means (K);
- further means (17) for identifying among said several television pictures the selected picture in which the cursor (F) is positioned, interrogating the state of said character generator, and calculating from the number of rows and columns, relative to the cursor (F), the corresponding cell of a tuning memory where tuning data are stored corresponding to the selected picture;
- means for supplying said tuning data to a tuner (A) for tuning into said program indicated by the cursor (F); and
- means for visualising a full screen picture corresponding to the television signal coming from said tuner (A).

6. Television picture visualising device according to claim 5, **characterized by** the fact that said command means for visualising on the whole screen the selected picture comprises a suitable key (E).

7. Television picture visualising device according to claim 6, **characterized by** the fact that said key (E) generates a command signal for selecting the program corresponding to the number (N) of the selected picture (11), obtained according to the line and column coordinates on which a character generator, that generates such number (N), has written on the picture.

## Patentansprüche

1. Verfahren zum Auswählen einer Fernsehsendung und Aktivierung des Empfangs und der Visualisierung auf einem Bildschirm (S) einer Fernsehbild-Visualisierungsvorrichtung,
**gekennzeichnet durch** eine Kombination der folgenden Schritte:
- Visualisieren mehrerer Bilder verkleinerter Abmessungen entsprechender Fernsehsendungen, welche in einem Speicher gespeichert sind und in einer Matrix entsprechend mehreren Zeilen und Spalten angezeigt werden, auf einem Bildschirm;
- Visualisieren eines Cursors (F) auf einem Bildschirm, welcher einem der Bilder überlagert ist, wobei der Cursor (F) **durch** einen Zeichengenerator erzeugt wird;
- Bereitstellen einer Befehlseinrichtung (K) zum Bewegen des Cursors (F) von einem der Bilder zu einem der benachbarten **durch** Betätigen von einer oder mehreren Tasten der Befehlseinrichtung;
- Bereitstellen einer weiteren Einrichtung (17) zum Bestimmen des selektierten Bildes, in welchem der Cursor (F) positioniert ist, aus den Fernsehbildern, **durch** Abfragen des Status des Zeichengenerators und **durch** Berechnen der entsprechenden Zelle eines Abstimm-Speichers, in welchem Abstimm-Daten entsprechend dem gewählten Bild gespeichert sind, aus der Nummer der Zeile und Spalte des Cursors (F); Liefern der Abstimm-Daten zu einem Tuner (A) zum Abstimmen auf die **durch** den Cursor (F) angezeigte Sendung; und
- Visualisieren eines Vollbildes entsprechend dem von dem Tuner (A) kommenden Fernsehsignal.

2. Verfahren nach Anspruch 1,
**dadurch gekennzeichnet, dass** die Auswahl des ausgewählten Bildes durch einen blinkenden Cursor (F) ausgeführt wird, wobei sich der Cursor (F) in vertikaler, horizontaler und/oder diagonaler Richtung bewegt.

3. Verfahren nach Anspruch 1 oder 2,
**dadurch gekennzeichnet, dass** der Schritt der Bewegung des Cursors (F) auch in der diagonalen Richtung eine Befehlsvorrichtung (R) mit acht Tasten (K) erfordert, welche entsprechend den Spitzen eines Oktagons angeordnet sind.

4. Verfahren nach einem der vorstehenden Ansprüche,
**dadurch gekennzeichnet, dass** der Cursor (F) die Form eines Pfeiles oder die Form einer Zahl aufweist.

5. Fernsehbild-Visualisierungsvorrichtung zum Auswählen einer Fernsehsendung und Aktivieren des Empfangs und deren Visualisierung auf einem Bildschirm (s),
**gekennzeichnet durch** eine Kombination:
- einer Einrichtung zum Visualisieren mehrerer Bilder entsprechender Fernsehsendungen verkleinerter Abmessungen, welche in einem Speicher gespeichert und in einer Matrix entsprechend der Mehrzahl von Zeilen und Spalten angezeigt werden, auf dem Bildschirm;
- einer Einrichtung zum Visualisieren eines Cursors (F), welcher einem der Bilder überlagert ist, auf dem Bildschirm, wobei der Cursor (F) **durch** einen Zeichengenerator erzeugt wird;
- einer Befehlseinrichtung (K) zum Bewegen des Cursors (F) von einem der Bilder zu einem der benachbarten **durch** Betätigen einer oder mehrerer Tasten der Befehlseinrichtung (K);
- einer weiteren Einrichtung (17) zum Identifizieren des ausgewählten Bildes, auf welchem der Cursor (F) positioniert ist, aus den Fernsehbildern, **durch** Abfragen des Status des Zeichengenerators und **durch** Berechnen der entsprechenden Zelle eines Abstimm-Speichers, in welchem die Abstimm-Daten entsprechend dem gewählten Bild gespeichert sind, aus der Nummer der Zeile und Spalte des Cursors (F);
- einer Einrichtung zum Liefern der Abstimm-Daten zu einem Tuner (A) zum Abstimmen der **durch** den Cursor (F) angegebenen Sendung; und einer Einrichtung zum Visualisieren eines Vollbildes entsprechend dem von dem Tuner (A) kommenden Fernsehsignal,

6. Fernsehbild-Visualisierungsvorrichtung nach Anspruch 5,
**dadurch gekennzeichnet, dass** die Befehlseinrichtung zum Visualisieren des ausgewählten Bildes aus dem gesamten Bildschirm eine geeignete Taste (E) umfasst.

7. Fernsehbild-Visualisierungsvorrichtung nach Anspruch 6,
**dadurch gekennzeichnet, dass** die Taste (E) ein Befehlssignal zum Selektieren der Sendung entsprechend der Nummer (N) des selektierten Bildes (11) erzeugt, welches entsprechend den Zeilen- und Spalten-Koordinaten erhalten wird, bei welchen ein Zeichengenerator, der diese Zahl (N) erzeugt, auf das Bild geschrieben hat.

## Revendications

1. Procédé de sélection d'un programme de télévision et d'activation de sa réception et de sa visualisation sur un écran (S) d'un dispositif de visualisation d'image de télévision, **caractérisé en ce qu'**il combine les étapes suivantes consistant à :
- visualiser sur ledit écran plusieurs images de dimensions réduites des programmes de télévision correspondants, mémorisées dans une mémoire et affichées dans une matrice selon une pluralité de rangées et colonnes ;
- visualiser sur ledit écran un curseur (F), superposé sur une desdites images, ledit curseur (F) est généré par un générateur de caractères ;
- prévoir des moyens de commande (K) pour déplacer le curseur (F) entre une des images et une quelconque des images voisines, en agissant sur une ou plusieurs touches desdits moyens de commande ;
- prévoir des moyens supplémentaires (17) pour identifier parmi lesdites multiples images de télévision l'image sélectionnée dans laquelle est positionné le curseur (F), interrogeant l'état dudit générateur de caractères et calculant à partir du nombre de rangées et de colonnes, par rapport au curseur (F), la cellule correspondante d'une mémoire de réglage où sont stockées des données de syntonisation correspondant à l'image sélectionnée ;
- fournir lesdites données de syntonisation à un syntoniseur (A) pour régler ledit programme indiqué par le curseur (F) ; et
- visualiser une image pleine page correspondant au signal de télévision en provenance dudit syntoniseur (A).

2. Procédé selon la revendication 1, **caractérisé en ce que** la sélection de l'image sélectionnée est réalisée par un curseur clignotant (F), ledit curseur (F) se déplaçant dans le sens vertical, horizontal et/ou en diagonale.

3. Procédé selon la revendication 1 ou 2, **caractérisé en ce que** ladite étape consistant à déplacer ledit curseur (F) même en diagonale prévoit un dispositif de commande (R) équipé de 8 touches (K) agencées selon les sommets d'un octogone.

4. Procédé selon l'une quelconque des revendications précédentes, **caractérisé en ce que** ledit curseur (F) est sous la forme d'une flèche ou sous la forme d'un nombre.

5. Dispositif de visualisation d'image de télévision pour sélectionner un programme de télévision et activer sa réception et sa visualisation sur un écran (S), **caractérisé en ce qu'**il comprend,
- des moyens pour visualiser sur ledit écran plusieurs images de dimensions réduites des programmes de télévision correspondants, mémorisées dans une mémoire et affichées dans une matrice selon une pluralité de rangées et colonnes ;
- des moyens pour visualiser sur ledit écran un curseur (F), superposé sur une desdites images, ledit curseur (F) est généré par un générateur de caractères ;
- des moyens de commande (K) pour déplacer le curseur (F) entre une des images et une quelconque des images voisines, en agissant sur une ou plusieurs touches desdits moyens de commande (K);
- des moyens supplémentaires (17) pour identifier parmi lesdites multiples images de télévision l'image sélectionnée dans laquelle est positionné le curseur (F), interrogeant l'état dudit générateur de caractères et calculant à partir du nombre de rangées et de colonnes, par rapport au curseur (F), la cellule correspondante d'une mémoire de réglage où sont stockées des données de syntonisation correspondant à l'image sélectionnée ;
- des moyens pour fournir lesdites données de syntonisation à un syntoniseur (A) pour régler ledit programme indiqué par le curseur (F) ; et
- des moyens pour visualiser une image pleine page correspondant au signal de télévision en provenance dudit syntoniseur (A).

6. Dispositif de visualisation d'image de télévision selon la revendication 5, **caractérisé par le fait que** lesdits moyens de commande pour visualiser sur la totalité de l'écran l'image sélectionnée comprennent une touche appropriée (E).

7. Dispositif de visualisation d'image de télévision selon la revendication 6, **caractérisé par le fait que** ladite touche (E) génère un signal de commande pour sélectionner le programme correspondant au nombre (N) de l'image sélectionnée (11), obtenue en fonction des coordonnées de ligne et de colonne auxquelles un générateur de caractères qui génère ce nombre (N) a écrit sur l'image.
